# EUROPEAN PATENT SPECIFICATION

(11) **EP 2 666 819 B1**
(45) Date of publication and mention of the grant of the patent: **05.09.2018**
(21) Application number: 12736635.9
(22) Date of filing: 18.01.2012
(51) Int. Cl.: C08L 27/06, C08K 5/01, C08J 9/04, D21H 27/20, C08K 5/00, C08K 13/02, C09D 127/06

(54) **VINYL CHLORIDE RESIN COMPOSITION COMPRISING DI(2-ETHYLHEXYL)CYCLOHEXANE-1,4-DICARBOXYLATE FOR WALLPAPER**
VINYLCHLORIDHARZZUSAMMENSETZUNG MIT DI(2-ETHYLHEXYL)CYCLOHEXAN-1,4-DICARBONSÄUREESTER FÜR TAPETEN
COMPOSITION DE RÉSINE CHLORURE DE VINYLE CONTENANT DU BIS(2-ÉTHYLHEXYL)- CYCLOHEXANE-1,4-DICARBOXYLATE POUR PAPIER PEINT

(30) Priority: 18.01.2011 KR 20110004737
(43) Date of publication of application: 27.11.2013
(73) Proprietor: Hanwha Chemical Corporation, Seoul 100-220 (KR)
(72) Inventor: KIM, Jae Song, Daejeon 305-750 (KR); YOON, Kyong Jun, Daejeon 305-761 (KR); JANG, Yeon Su, Daejeon 302-243 (KR); SIM, Ki Jo, Gyeongju-si Gyeongbuk 780-040 (KR)
(74) Representative: Zinnecker, Armin
(86) International application number: PCT/KR2012/000412
(87) International publication number: WO 2012/099382

(56) References cited:
- EP-B1- 1 432 758
- WO-A1-2010/071717
- WO-A2-2010/044638
- KR-A- 20090 058 067
- US-A- 4 457 944
- US-A1- 2005 049 341
- US-B1- 6 284 917

## Description

### [Technical Field]

The present invention relates to a vinyl chloride resin composition, and more particularly, to an eco-friendly vinyl chloride resin composition capable of minimizing an amount of generated volatile organic compounds (VOCS) to have high safety on the environment and not using a phthalate based plasticizer.

### [Background Art]

A vinyl chloride resin, which is a vinyl chloride homopolymer or an interpolymer containing vinyl chloride at a content of 50% or more, is one of the five major thermoplastic plastic resins prepared by suspension polymerization and emulsion polymerization. Among them, a polyvinyl chloride resin prepared by emulsion polymerization and mixed with a plasticizer, a stabilizer, a filler, a blowing agent, a pigment, a viscosity depressant and titanium dioxide (TiO₂), is used in a plastisol form in various fields such as a floor material, wallpaper, tarpaulin, artificial leather, toys or a coating material for an under body of a vehicle, through a coating forming method or mold coating forming method.

Particularly, the wallpaper is a product mainly exposed in residential and office spaces, and 60% or more of the wallpaper is manufactured using the vinyl chloride resin. Recently, a main issue of the wallpaper relates to eco-friendly wallpaper, and a standard for judging an eco-friendly property has been determined for a healthy building material (HB) grade (four grades from most excellent, excellent, good, and fair) ranked according to the emission amount of the volatile organic compounds (VOCs) by Korea Air Clean Association and determined whether or not phthalate based plasticizers (particularly, di-2-ethylhexyl phthalate (DEHP), butyl benzyl phthalate (BBP), and di-n-butyl phthalate (DBP)) that are considered as substances suspected as environmental hormones are present.

Describing a manufacturing process of the wallpaper using the vinyl chloride resin, after the plastisol is prepared by mixing solid raw materials including the vinyl chloride resin, the filler, and the pigment and liquid raw materials including the plasticizer, the stabilizer, and the viscosity depressant, this plastisol is coated onto paper and subjected to a gelling process, a printing process, a foaming process, and an embossing process, thereby manufacturing the vinyl chloride based wallpaper. In this case, viscosity of the plastisol is a main physical property determining a coating property in a coating process and productivity of the wallpaper, and the lower the viscosity, the more advantageous.

The volatile organic compounds generated in the vinyl chloride based wallpaper are generated from the viscosity depressant used for depressing the viscosity of the plastisol, the liquid stabilizer, and a solvent of oil based ink used in the printing process and are almost not affected by the plasticizer having a high boiling point. Particularly, in the case in which the viscosity depressant is excessively added, the viscosity depressant causes deterioration of quality of the product in addition to generation of the volatile organic compounds. Therefore, in order to reduce the generation of the volatile organic compounds, an addition amount of a liquid viscosity depressant causing the generation of the volatile organic compounds should be minimized.

The plasticizer is a liquid component accounting for the highest content in the vinyl chloride resin composition for the wallpaper, and as the plasticizer, recently, di-2-ethylhexyl phthalate (DEHP), di-isononyl phthalate (DINP), di-iso-decyl phthalate (DIDP), butyl benzyl phthalate (BBP), and di-n-butyl phthalate (DBP), which are phthalate based plasticizers, and dioctyl terephthalate (DOTP), which is a non-phthalate based plasticizer, has been partially used. Among the phthalate based plasticizers, some products such as DEHP, BBP, and DBP are socially suspected as environmental hormones, that is, endocrine disruptors inhibiting or disrupting hormone action in the human body, such that there is the trend toward regulating these products.

The case in which DOTP, which is a non-phthalate based plasticizer, is used alone or mixed with DINP to be used is disclosed in Korean Patent Laid-Open Publication No. 2008-0105341 (Patent Document 1). Since DOTP is not a phthalate based plasticizer, DOTP is free from controversy regarding the environmental hormone, but there is no advantage in view of physical properties for the wallpaper, and various problems such as a compatibility problem with the additives (the stabilizer and the viscosity depressant) used as raw materials for manufacturing the existing wallpaper, deterioration of a foaming property at the time of manufacturing the wallpaper and a rapid increase in the viscosity in winter have been discovered.

### [Disclosure]

### [Technical Problem]

An object of the present invention is to provide an eco-friendly vinyl chloride resin composition containing di(2-ethylhexyl)cyclohexane-1,4-dicarboxylate (DEHCH, also referred to in this specification as diethylhexylcyclohexane) plasticizer capable of preparing a plastisol having significantly low viscosity, having excellent compatibility with additives used according the related art, and minimizing generation of volatile organic compounds, as compared to a vinyl chloride composition for wallpaper using di-2-ethylhexyl phthalate, di-isononyl phthalate, or dioctyl terephthalate, which is used as a plasticizer according to the related art.

The vinyl chloride resin composition according to the present invention may minimize a phthalate based plasticizer of which there has been controversy regarding harmful effects on the environment and significantly reduce the viscosity of the plastisol by using diethylhexylcyclohexane, which is an eco-friendly plasticizer free from controversy regarding the environmental hormone. Therefore, since the vinyl chloride composition according to the present invention may reduce a usage amount of the viscosity depressant generating the volatile organic compounds having a low boiling point, the generation of the volatile organic compounds may be minimized, and volatile organic compounds generated according to the addition of other low boiling point materials may be also minimized.

The vinyl chloride resin composition according to the present invention may have a better foaming property than that of existing vinyl chloride resin compositions. The present invention may provide a vinyl chloride resin composition having a better foaming property than that of the existing vinyl chloride resin composition using the characteristics as described above.

Particularly, viscosity is rapidly increased in the plastisols according to the related art in winter, such that an excess viscosity depressant needs to be additionally added. However, since the vinyl chloride resin composition according to the present invention contains diethylhexylcyclohexane, viscosity of the plastisol of the invention is not significantly increased, and low-temperature changes with the passage of time are significantly small, such that this composition may be advantageous for manufacturing an eco-friendly product.

In addition, it was discovered that the vinyl chloride resin composition according to the present invention had compatibility with other additives and also had low-temperature stability. Therefore, the vinyl chloride resin composition according to the present invention may be used for a long time and have excellent low-temperature workability as compared to the existing vinyl chloride resin compositions.

In the case in which the vinyl chloride resin composition as described above is used as an interior material such as wallpaper, in a state in which contents of constituents including the vinyl chloride resin, the plasticizer, and other additives are optimized, the desired excellent physical properties may be implemented.

### [Technical Solution]

In one general aspect, the vinyl chloride resin composition of the invention contains: 40 to 120 parts by weight of a plasticizer, whereby the plasticizer comprises a mixture of di(2-ethylhexyl)cyclohexane-1,4-dicarboxylate and, optionally, dioctyl terephthalate in a weight ratio of 100:0 to 10:90, 0.5 to 7 parts by weight of a stabilizer, 0.5 to 5 parts by weight of a blowing agent, 30 to 150 parts by weight of a filler, and 1 to 20 parts by weight of titanium dioxide (TiO₂), based on 100 parts by weight of a vinyl chloride resin.

The viscosity of the vinyl chloride resin composition according to the present invention may be reduced by 40% with respect to that of compositions comprising di-2-ethylhexyl phthalate, which is the representative phthalate based plasticizer, and at the time of testing the vinyl chloride resin composition depending on the group quality certification regulations of eco-friendly building materials established by Korea Air Cleaning Association, an emission amount of formaldehyde may be less than 0.015mg/m²h and a total emission amount of the volatile organic compounds may be 0.10mg/m²h or less.

In addition, since the vinyl chloride resin composition contains diethylhexylcyclohexane to thereby have low room-temperature and low-temperature viscosities, an excellent coating property may be implemented, the foaming property may be excellent, and generation of the volatile organic compounds may be minimized, such that stability on the environment may be high.

The vinyl chloride resin composition according to the present invention may have excellent workability and low-temperature storage stability due to the excellent low-temperature viscosity in addition to the excellent foaming property as described above, such that working conditions in winter may be easy as compared to the existing vinyl chloride resin composition. Further, the low-temperature changes with the passage of time are low, but a gelling rate is excellent. Therefore, the workability may be excellent even though thermal conditions of the existing system for preparing the vinyl chloride resin composition do not change.

The plasticizer contains diethylhexylcyclohexane or the mixture of diethylhexylcyclohexane and dioctyl terephthalate. The mixing weight ratio of diethylhexylcyclohexane and dioctyl terephthalate is 100:0 to 10:90 by weight%.

The vinyl chloride resin composition according to the present invention may reduce the viscosity at room temperature and prevent the viscosity from being increased at a low temperature during winter by using diethylhexylcyclohexane alone or using the mixture of diethylhexylcyclohexane and dioctyl terephthalate as described above, an addition amount of a liquid viscosity depressant having high volatility may be minimized, and the compatibility with additives may be excellent. In addition, since diethylhexylcyclohexane may have a rapid gelling rate, a production rate may be improved.

The vinyl chloride resin composition according to the present invention contains 40 to 120 parts by weight, more preferably, 70 to 90 parts by weight of the plasticizer, based on 100 parts by weight of the vinyl chloride resin. In the case in which a content of the plasticizer contained in the vinyl chloride resin composition for wallpaper according to the present invention is less than 40 parts by weight, the viscosity of the plastisol is excessively high, such that the coating property may be deteriorated and flexibility of the product may be reduced, and in the case in which the content is more than 120 parts by weight, a bleeding effect (a phenomenon that the plasticizer bleeds onto a surface of a forming product) may be easily generated, and the surface may not be completely dried to thereby be sticky, such that there may be problems in a processing process and a final product.

The vinyl chloride resin composition according to the present invention further contains additives including the blowing agent, the stabilizer, possibly an auxiliary stabilizer, the filler, titanium dioxide (TiO₂), and optionally a viscosity depressant. The additive may be appropriately selected according to physical properties desired to be improved in the vinyl chloride resin composition, and the composition according to the present invention may contain at least one of the above-mentioned additives.

More specifically, the vinyl chloride resin composition according to the present invention contains 40 to 120 parts by weight of the plasticizer, 0.5 to 7 parts by weight of the stabilizer, 0.5 to 5 parts by weight of the blowing agent, 30 to 150 parts by weight of the filler, and 1 to 20 parts by weight of titanium dioxide (TiO₂), based on 100 parts by weight of the vinyl chloride resin.

The stabilizer may be added in order to prevent various physical property changes generated as HCl is separated from polyvinyl chloride to form a polyene structure, which is a chromophore, and then generate a cutting and cross-linking phenomenon in a main chain and include at least one selected from a group consisting of Ca-Zn based compounds, K-Zn based compounds, Ba-Zn based compounds, organic tin based compounds, metallic soap based compounds, phenolic compounds, phosphoric acid ester based compounds, and phosphorous acid ester based compounds. A specific example of the stabilizer capable of being used in the present invention may include the Ca-Zn based compounds; K-Zn based compounds; the Ba-Zn based compounds; organic tin based compounds such as mercaptide based compounds, maleic acid based compound, or carboxylic acid based compound; the metallic soap based compounds such as Mg-stearate, Ca-stearate, Pb-stearate, Cd-stearate, or Ba-stearate; the phenolic compounds; the phosphoric acid ester based compounds; the phosphorous acid ester based compounds; and these stabilizers may be selectively contained according to the using purposes. In the present invention, particularly, the Ca-Zn based compounds and the K-Zn based compounds, preferably, Ca-Zn composite organic compounds, K-Zn based composite organic compounds may be used.

The vinyl chloride resin, which is either a vinyl chloride homopolymer or an interpolymer containing vinyl chloride at a content of 50% or more, is one of the five major thermoplastic plastic resins and may be prepared by suspension polymerization and emulsion polymerization. The vinyl chloride resin used in the present invention is a resin prepared by micro-suspension polymerization or emulsion polymerization and a degree of polymerization thereof is 900 to 1700.

The content of the stabilizer preferably 0.5 to 7 parts by weight, more preferably 1 to 4 parts by weight, based on 100 parts by weight of the vinyl chloride resin. In the case in which the content of the stabilizer is less than 0.5 parts by weight, thermal stability may be reduced, and in the case in which the content is more than 7 parts by weight, thermal stability may be excessively exhibited.

The blowing agent used in the present invention may include at least one selected from a chemical blowing agent, a physical blowing agent, or a mixture thereof.

The chemical blowing agent is not particularly limited as long as the compound may be decomposed at a specific temperature or more to generate gas, and examples thereof may include azodicarbonamide, azodi-isobutyro-nitrile, benzenesulfonhydrazide, 4,4-oxybenzene sulfonyl-semicarbazide, p-toluene sulfonyl semicarbazide, barium azodicarboxylate, N,N'-dimethyl-N,N'-dinitrosoterephthalamide and trihydrazino triazine. In addition, the example of the chemical blowing agent may include sodium bicarbonate, potassium bicarbonate, ammonium bicarbonate, sodium carbonate and ammonium carbonate.

Further, examples of the physical blowing agent may include an inorganic blowing agent such as carbon dioxide, nitrogen, argon, water, air or helium, or an organic blowing agent such as aliphatic hydrocarbon containing 1 to 9 carbon atoms, aliphatic alcohol containing 1 to 3 carbon atoms, and halogenated aliphatic hydrocarbon containing 1 to 4 carbon atoms. Specific examples of the above-mentioned compounds may be as follows: Examples of the aliphatic hydrocarbon compounds may include methane, ethane, propane, normal butane, isobutene, normal pentane, isopentane and neopentane, examples of the aliphatic alcohols may include methanol, ethanol, normal propanol and isopropanol, and examples of the halogenated aliphatic hydrocarbon compounds may include methyl fluoride, perfluoromethane, ethyl fluoride, 1,1-difluoroethane (HFC-152a), 1,1,1-trifluoroethane (HFC-143a), 1,1,1,2-tetrafluoroethane (HFC-134a), 1,1,2,2-tetrafluoromethane (HFC-134), 1,1,1,3,3-pentafluorobutane (HFC-365mfc), 1,1,1,3,3-pentafluoropropane (HFC.sub.13 245fa), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, methyl chloride, methylene chloride, ethyl chloride, 1,1,1-trichloroethane, 1,1-dichloro-1-fluoroethane, (HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane and dichlorohexafluoropropane. The content of the blowing agent as described above is 0.5 to 5 parts by weight, based on 100 parts by weight of the vinyl chloride resin. In the case in which the content is excessively low, an amount of generated gas for foaming is excessively small, such that a foaming effect may be insignificant or not obtained, and in the case in which the content is excessively high, the amount of generated gas is excessively large, such that it may be difficult to obtain the desired physical property.

The filler of the present invention may be used in order to improve productivity of the vinyl chloride resin composition and a dry touch property and include at least one selected from a group consisting of calcium carbonate, talc, kaolin, silica, alumina, magnesium hydroxide, and clay.

The vinyl chloride resin composition according to the present invention may contain a viscosity depressant, as needed. More specifically, an ester based viscosity depressant may be used.

In the vinyl chloride resin composition according to the present invention, the content of the filler is 30 to 150 parts by weight, more preferably 50 to 130 parts by weight. In the case in which the content of the filler is less than 50 parts by weight, dimensional stability and economical efficiency may be reduced, and in the case in which the content is more than 130 parts by weight, a foaming surface may not be good, and processability may be deteriorated.

Whiteness and a hiding property may be improved by adding titanium dioxide (TiO₂) in the vinyl chloride resin composition according to the present invention. The content of titanium dioxide is preferably 1 to 20 parts by weight, more preferably 3 to 15 parts by weight, based on 100 parts by weight of the vinyl chloride resin. In the case in which the content of titanium dioxide is less than 3 parts by weight, the whiteness and hiding property may be deteriorated, such that after printing, colors may not be implemented as desired, and in the case in which the content is more than 15 parts by weight, the foaming surface may be deteriorated.

The vinyl chloride resin composition according to the present invention may be prepared using the vinyl chloride resin, the plasticizer, and additives by a general method, and the method is not particularly limited.

As described above, the vinyl chloride resin composition according to the present invention may be eco-friendly and have an excellent foaming property and workability, such that the vinyl chloride resin composition may be widely applied to interior materials, for example, a wallpaper, artificial leather or a floor material.

### [Advantageous Effects]

As described above, the vinyl chloride resin composition prepared according to the present invention may be free from controversy regarding the environment by using diethylhexylcyclohexane, which is the non-phthalate based plasticizer substituting for the controversial phthalate based plasticizer.

In addition, the vinyl chloride resin composition using diethylhexylcyclohexane may have a significantly low initial viscosity and low-temperature viscosity and generate less the volatile organic compounds (VOCs), as compared to the existing phthalate based plasticizer and dioctyl terephthalate, which is the non-phthalate based plasticizer, such that the vinyl chloride resin composition may be advantageous for developing eco-friendly products.

Particularly, the vinyl chloride resin composition according to the present invention may have excellent compatibility with additive. In addition, since diethylhexylcyclohexane may have a rapid gelling rate, a production rate may be improved. Further, there is an advantage in that the product may be prepared under the same conditions as those for preparing a plastisol using di-2-ethylhexyl phthalate that is mainly used in the art.

Furthermore, the vinyl chloride resin composition according to the present invention may be eco-friendly and have a significantly excellent foaming property and workability, such that the vinyl chloride resin composition may be used to manufacture floor materials, artificial leather, or the like, as well as wallpaper, and widely applied to the floor materials.

### [Description of Drawings]

FIG. 1 shows results obtained by measuring low-temperature storage stability of plasticizers (DEHP, DEHCH, DINP, and DOTP).
FIG. 2 shows results obtained by comparing gelling rates of the plasticizers (DEHP, DEHCH, DINP, and DOTP) with each other.

### [Best Mode]

The present invention will be described in detail by Examples.

However, the following Examples are to illustrate the present invention, and the scope of the present invention is not limited to the following Examples.

### (Evaluation)

### Viscosity measurement

After the prepared plastisol was left in a constant temperature oven at 25°C for 1 hour, the viscosity of the plastisol was measured using a Brookfield viscometer (spindle #6, 20, 5 RPM). In addition, after the prepared plastisol was stored in a refrigerator at -5°C, the viscosity with the passage of time was evaluated.

A viscosity change with the passage of time means a ratio of an initial viscosity and a viscosity after 1 day, and a viscosity change with the passage of time at a lower temperature means a degree of a viscosity change at - 5°C after 1 day.

### Foaming surface and foaming cell measurement

A foaming property is the most important factor in foaming products. The foaming property means a property indicating a surface state of the product, a size of a foaming cell, and uniformity of the cell. The plastisol according to the present invention was coated onto paper at a thickness of 0.2mm using an applicator and then heated in an oven at 220°C for 40 seconds to perform the foaming, thereby manufacturing a foaming sheet. The surface state of the foaming sheet manufactured as described above was observed by the naked eye, and the foaming cells were photographed and observed using an electron microscope. The results were represented by the following symbols.

### (Very good) ⊚ > ○ > Δ> X (very poor)

### Whiteness measurement

The whiteness of the foaming sheet, which is a main factor indicating definition of color during a color matching process, was measured using a colorimeter and then arithmetically expressed.

### Thermal stability measurement

After the plastisol was coated onto the paper at a thickness of 0.2mm using an applicator and then heated in an oven at 220°C for 60 to 100 seconds, observation was performed at a timing point at which the yellowing starts, and the thermal stability was compared through relative comparison. The thermal stability was classified according to the following standard.

### (Very good) ⊚ > ○ > Δ> X (very poor)

### Low-temperature characteristics evaluation

After a plasticizer was injected into a 50ml vial and left at -15°C for 4 hours, the plasticizer is picked out and an appearance thereof was observed by the naked eye.

### Gelling rate measurement

A gelling rate of the prepared plastisol was measured at 110°C using a scanning vibrating needle curemeter (SVNC). As the gelling progressed in the SVNC, amplitude was reduced. The gelling rate was compared and measured using a rate of reducing this value.

### HB mark

The HB mark is a mark given to a product according to the results obtained by allowing an accredited laboratory to strictly and thoroughly perform a quality certification test on emission intensity of organic compounds (total volatile organic carbon (TVOC), formaldehyde (HCHO)) depending on the group quality certification regulations of eco-friendly building materials established by Korea Air Cleaning Association. The certification grade of the wallpaper was determined by the following Table and expressed as the number of clovers in a certification mark. The case in which the number of clovers was 5, the case in which the number of clovers was 4, the case in which the number of clovers was 3, the case in which the number of clovers was 2, and the case in which the number of clovers was 1 were classified into most excellent, excellent, good, fair I, and fair II, respectively.

**<Table 1>**

| Classification | | General material (wallpaper) |
|---|---|---|
| Most excellent | TVOC | Less than 0.10 |
| | HCHO | Less than 0.03 |
| Excellent | TVOC | 0.10 or more to less than 0.2 |
| | HCHO | 0.03 or more to less than 0.05 |
| Good | TVOC | 0.20 or more to less than 0.40 |
| | HCHO | 0.05 or more to less than 0.12 |
| Fair I | TVOC | 0.40 or more to less than 2.00 |
| | HCHO | 0.12 or more to less than 0.60 |
| Fair II | TVOC | 2.00 or more to less than 4.00 |
| | HCHO | 0.60 or more to less than 1.25 |

### (Example 1)

Based on 100 parts by weight of a vinyl chloride resin (emulsion polymerization resin having a degree of polymerization of 900), 60 parts by weight of diethylhexylcyclohexane as a plasticizer, 3 parts by weight of K/Zn based composite stabilizer (KKZ102PF, Woochang Chem. Co.), 3 parts by weight of an azodicarbonamide blowing agent (DWPX03, Dongjin Semichem), 5 parts by weight of an ester based viscosity depressant (V5125, BYK Corp.), 10 parts by weight of TiO₂ (R902, Dupont Corp.), and 100 parts by weight of calcium carbonate (OM-10, Omya Korea) having an average particle size of 10*µ*m were mixed in a Mathis mixer for 10 minutes to prepare a plastisol. Then, physical properties were evaluated by the measuring methods described above, and the results were shown in Table 2.

### (Example 2)

A plastisol was prepared by the same method as that in Example 1 except for using 70 parts by weight of diethylhexylcyclohexane as the plasticizer, and the results were shown in Table 2.

### (Example 3)

A plastisol was prepared by the same method as that in Example 1 except for using 80 parts by weight of diethylhexylcyclohexane as the plasticizer, and the results were shown in Table 2.

### (Example 4)

A plastisol was prepared by the same method as that in Example 1 except for using 90 parts by weight of diethylhexylcyclohexane as the plasticizer, and the results were shown in Table 2.

### (Comparative example 1)

A plastisol was prepared by the same method as that in Example 1 except for using 70 parts by weight of di-2-ethylhexyl phthalate as the plasticizer instead of diethylhexylcyclohexane, and the results were shown in Table 2.

### (Comparative example 2)

A plastisol was prepared by the same method as that in Example 1 except for using 70 parts by weight of di-isononyl phthalate as the plasticizer instead of diethylhexylcyclohexane, and the results were shown in Table 2.

### (Comparative example 3)

A plastisol was prepared by the same method as that in Example 1 except for using 70 parts by weight of dioctyl terephthalate as the plasticizer instead of diethylhexylcyclohexane, and the results were shown in Table 2.

**<Table 2>**

| | Example 1 | Example 2 | Example 3 | Example 4 | Comparat ive Example 1 | Comparat ive Example 2 | Comparat ive Example 3 |
|---|---|---|---|---|---|---|---|
| Initial viscosity (CPS) | 9,700 | 5,450 | 3,500 | 1,850 | 10,100 | 9,100 | 8,750 |
| Room-temperature viscosity change ratio with the passage of time | 1.15 | 1.09 | 1.09 | 1.14 | 1.14 | 1.14 | 1.06 |
| Low-temperature viscosity (CPS, -5°C) | 56,400 | 24,800 | 16,200 | 10,000 | 87,200 | 76,500 | 66,800 |
| Low-temperature viscosity change ratio with the passage of time | 5.81 | 4.55 | 4.63 | 5.41 | 8.63 | 8.41 | 7.63 |
| Process viscosity (CPS, 500 sec⁻¹) | 9,070 | 3,950 | 2,170 | 1,320 | 8,160 | 7,330 | 7,570 |
| Foaming property | ⊚ | ⊚ | ⊚ | ⊚ | ⊚ | ○ | ○ |
| Thermal stability | ⊚ | ○ | ○ | Δ | ○ | Δ | ⊚ |
| Whiteness | 91.2 | 91.0 | 91.1 | 90.8 | 91.4 | 91.2 | 91.0 |
| TVOC | 0.04 | 0.05 | 0.07 | 0.10 | 0.09 | 0.08 | 0.10 |
| HCHO | 0.001 | 0.002 | 0.001 | 0.002 | 0.001 | 0.001 | 0.002 |

As shown in Table 2, the plastisols prepared in Examples 1 to 4 in which diethylhexylcyclohexane was used as the plasticizer had a significantly low viscosity as compared to the plastisols prepared in Comparative Examples 1 to 3 in which di-2-ethylhexyl phthalate and di-isononyl phthalate, which are phthalate based plasticizers, and dioctyl terephthalate, which is an eco-friendly plasticizer, were used, and particularly, the viscosity was about 50% as compared to di-2-ethylhexyl phthalate.

The process viscosity, which is a viscosity when the plastisol passes through a coater at the time of manufacturing the wallpaper, is a very important property value in a manufacturing process of the wallpaper. It may be confirmed that the process viscosity in Examples 1 to 4 according to the present invention was significantly low. In addition, a difference in the room-temperature viscosity change with the passage of time between the plasticizers to be compared was not large.

In the case in which the viscosity of the plasticizer increased while a temperature decreased during winter, as a method of reducing a viscosity as compared to the viscosity during summer in order to prevent this case, a liquid additive was excessively added. However, in this case, there were problems such as an increase in cost and generation of volatile organic compounds (VOCs). Therefore, the lower is the viscosity of the plasticizer during winter, the more suitable the plasticizer is for manufacturing eco-friendly wallpaper. In this regard, the low-temperature viscosity and the low-temperature viscosity change with the passage of time were significantly low in Examples 1 to 4 in which diethylhexylcyclohexane was used as the plasticizer as compared to Comparative Examples 1 to 3, such that it may be confirmed that the plasticizers of Examples 1 to 4 were excellent. Particularly, since the low-temperature viscosity and the low-temperature viscosity change with the passage of time were significantly low as compared to Comparative Example 3 in which dioctyl terephthalate, which has been used as the eco-friendly plasticizer, was used as the plasticizer, low viscosity characteristics of diethylhexylcyclohexane may be further highlighted during winter.

All of the foaming properties in Examples 1 to 4 were significantly excellent and similar to those in Comparative Examples 1 to 3.

The thermal stability of diethylhexylcyclohexane was more excellent than that of di-isononyl phthalate, similar to that of dioctyl phthalate, and slightly lower than that of dioctyl terephthalate. However, since thermal stability of di-isononyl phthalate does not cause a problem in a manufacturing process of polyvinyl chloride (PVC) wallpaper, the thermal stability of diethylhexylcyclohexane does not matter in a manufacturing process of the wallpaper.

The whiteness in all of the Examples and Comparative Examples were similar.

Describing the results obtained by evaluating the physical properties according to the content of diethylhexylcyclohexane in Examples 1 to 4 and Comparative Examples 1 to 3, the viscosity and physical properties in the case in which 60 parts by weight of diethylhexylcyclohexane was mixed were similar to those in the case in which 70 parts by weight of di-2-ethylhexyl phthalate was mixed. Therefore, in the case of using diethylhexylcyclohexane, an addition amount of the plasticizer may be reduced by approximately 10 parts by weight.

Further, an addition amount of the viscosity depressant additionally added in order to control the viscosity in a wallpaper manufacturing factory may be reduced, which may be advantageous for manufacturing the eco-friendly wallpaper. In addition, a possibility that the VOC will be generated may be reduced by reducing the addition amount of the viscosity depressant, and a tacky phenomenon generated during the manufacturing process of the wallpaper may be prevented.

The following Examples 5 to 10 were to evaluate a mixing possibility of diethylhexylcyclohexane and dioctyl terephthalate as the plasticizer, and the evaluation was performed while controlling a mixing ratio of diethylhexylcyclohexane and dioctyl terephthalate.

### (Example 5)

A plastisol was prepared by the same method as that in Example 1 except for using 60 parts by weight of diethylhexylcyclohexane and 10 parts by weight of dioctyl terephthalate as the plasticizer, and the results were shown in Table 3.

### (Example 6)

A plastisol was prepared by the same method as that in Example 1 except for using 50 parts by weight of diethylhexylcyclohexane and 20 parts by weight of dioctyl terephthalate as the plasticizer, and the results were shown in Table 3.

### (Example 7)

A plastisol was prepared by the same method as that in Example 1 except for using 40 parts by weight of diethylhexylcyclohexane and 30 parts by weight of dioctyl terephthalate as the plasticizer, and the results were shown in Table 3.

### (Example 8)

A plastisol was prepared by the same method as that in Example 1 except for using 30 parts by weight of diethylhexylcyclohexane and 40 parts by weight of dioctyl terephthalate as the plasticizer, and the results were shown in Table 3.

### (Example 9)

A plastisol was prepared by the same method as that in Example 1 except for using 20 parts by weight of diethylhexylcyclohexane and 50 parts by weight of dioctyl terephthalate as the plasticizer, and the results were shown in Table 3.

### (Example 10)

A plastisol was prepared by the same method as that in Example 1 except for using 10 parts by weight of diethylhexylcyclohexane and 60 parts by weight of dioctyl terephthalate as the plasticizer, and the results were shown in Table 3.

**<Table 3>**

| | Example 5 | Example 6 | Example 7 | Example 8 | Example 9 | Example 10 |
|---|---|---|---|---|---|---|
| Initial viscosity (CPS) | 5,050 | 5,400 | 5,850 | 6,800 | 7,250 | 7,500 |
| Room-temperature viscosity change ratio with the passage of time | 1.08 | 1.05 | 1.05 | 1.06 | 1.05 | 1.09 |
| Low-temperature viscosity (CPS, - 5°C) | 31,350 | 34,050 | 38,750 | 43,200 | 46,450 | 54,000 |
| Low-temperature viscosity change ratio with the passage of time | 4.63 | 4.86 | 4.98 | 4.53 | 4.50 | 4.89 |
| Process viscosity (CPS, 500 sec⁻¹) | 4,130 | 4,530 | 4,990 | 5,460 | 6,040 | 6,810 |
| Foaming property | ⊚ | ⊚ | ⊚ | ⊚ | ○ | ○ |
| Thermal stability | ○ | ○ | ⊚ | ⊚ | ⊚ | ⊚ |
| Whiteness | 91.0 | 90.9 | 91.0 | 91.0 | 91.0 | 91.0 |
| TVOC | 0.05 | 0.06 | 0.06 | 0.07 | 0.08 | 0.08 |
| HCHO | 0.001 | 0.001 | 0.001 | 0.001 | 0.001 | 0.001 |

As shown in Table 3, in the case in which dioctyl terephthalate was mixed with diethylhexylcyclohexane, as the content of dioctyl terephthalate was increased, the viscosity was increased, and the low-temperature viscosity and the low-temperature viscosity change with the passage of time were slightly increased. Particularly, comparing Examples 5 to 10 with Comparative Example 3, in the case in which a small amount (10 weight% or more) of dioctyl terephthalate was mixed with diethylhexylcyclohexane, the low-temperature viscosity change with the passage of time was significantly reduced, as compared to the case of using dioctyl terephthalate alone.

As the content of dioctyl terephthalate was increased, the foaming property was slightly reduced, which did not cause problems, and it may be confirmed that thermal stability was improved. Therefore, through the Examples 5 to 10 according to the present invention, it may be confirmed that in the case in which the mixture of diethylhexylcyclohexane and dioctyl terephthalate was contained at a content of 70 parts by weight, based on 100 parts by weight of the vinyl chloride resin, a preferable mixing ratio was 70:0 to 10:60.

The following Comparative Examples 4 to 9 were to evaluate a mixing possibility of diethylhexylcyclohexane and di-isononyl phthalate as the plasticizer, and the evaluation was performed while controlling a mixing ratio of diethylhexylcyclohexane and di-isononyl phthalate.

### (Comparative Example 4)

A plastisol was prepared by the same method as that in Example 1 except for using 60 parts by weight of diethylhexylcyclohexane and 10 parts by weight of di-isononyl phthalate as the plasticizer, and the results were shown in Table 4.

### (Comparative Example 5)

A plastisol was prepared by the same method as that in Example 1 except for using 50 parts by weight of diethylhexylcyclohexane and 20 parts by weight of di-isononyl phthalate as the plasticizer, and the results were shown in Table 4.

### (Comparative Example 6)

A plastisol was prepared by the same method as that in Example 1 except for using 40 parts by weight of diethylhexylcyclohexane and 30 parts by weight of di-isononyl phthalate as the plasticizer, and the results were shown in Table 4.

### (Comparative Example 7)

A plastisol was prepared by the same method as that in Example 1 except for using 30 parts by weight of diethylhexylcyclohexane and 40 parts by weight of di-isononyl phthalate as the plasticizer, and the results were shown in Table 4.

### (Comparative Example 8)

A plastisol was prepared by the same method as that in Example 1 except for using 20 parts by weight of diethylhexylcyclohexane and 50 parts by weight of di-isononyl phthalate as the plasticizer, and the results were shown in Table 4.

### (Comparative Example 9)

A plastisol was prepared by the same method as that in Example 1 except for using 10 parts by weight of diethylhexylcyclohexane and 60 parts by weight of di-isononyl phthalate as the plasticizer, and the results were shown in Table 4.

### (Example 11)

Based on 100 parts by weight of a vinyl chloride resin (emulsion polymerization resin having a degree of polymerization of 900), 70 parts by weight of diethylhexylcyclohexane as a plasticizer, 3 parts by weight of K/Zn based composite stabilizer (KKZ102PF, Woochang Chem. Co.), 3 parts by weight of an azodicarbonamide blowing agent (DWPX03, Dongjin Semichem), 10 parts by weight of TiO₂ (R902, Dupont Corp.), and 100 parts by weight of calcium carbonate (OM-10, Omya Korea) having an average particle size of 10*µ*m were mixed in a Mathis mixer for 10 minutes to prepare a plastisol. Then, physical properties were evaluated by the measuring methods described above, and the results were shown in Table 4.

**<Table 4>**

| | Comparative Example 4 | Comparative Example 5 | Comparative Example 6 | Comparative Example 7 | Comparative Example 8 | Comparative Example 9 | Example 11 |
|---|---|---|---|---|---|---|---|
| Initial viscosity (CPS) | 6,050 | 6,650 | 7,200 | 7,650 | 8,350 | 8,750 | 10,200 |
| Room-temperature viscosity change ratio with the passage of time | 1.12 | 1.08 | 1.10 | 1.08 | 1.10 | 1.14 | 1.07 |
| Low-temperature viscosity (CPS, -5°C) | 37,000 | 42,000 | 47,600 | 50,800 | 57,800 | 66,800 | 52,100 |
| Low-temperature viscosity change ratio with the passage of time | 3.63 | 3.89 | 3.90 | 4.03 | 4.13 | 4.45 | 3.52 |
| Process viscosity (CPS, 500 sec⁻¹) | 3.530 | 4,080 | 4,460 | 4,760 | 5,060 | 5,410 | 5,320 |
| Foaming property | ⊚ | ⊚ | ⊚ | ⊚ | ⊚ | ⊚ | ⊚ |
| Thermal stability | ○ | ○ | ○ | ○ | ○ | ○ | ○ |
| Whiteness | 91.1 | 91.0 | 91.1 | 91.2 | 91.2 | 91.3 | 91.1 |
| TVOC | 0.06 | 0.05 | 0.06 | 0.07 | 0.07 | 0.08 | 0.02 |
| HCHO | 0.001 | 0.001 | 0.001 | 0.002 | 0.001 | 0.001 | 0.001 |

As shown in Table 4, in the cases in which di-isononyl phthalate was mixed with diethylhexylcyclohexane, as the content of di-isononyl phthalate was increased, the viscosity was increased, and the low-temperature viscosity and the low-temperature viscosity change with the passage of time were slightly increased, but a change in the foaming property was not significant. In addition, comparing Comparative Examples 4 to 9 with Comparative Example 2, when a small amount (10 weight% or more) of di-isononyl phthalate was mixed with diethylhexylcyclohexane, the low-temperature viscosity change with the passage of time was significantly reduced, as compared to the case of using di-isononyl phthalate alone.

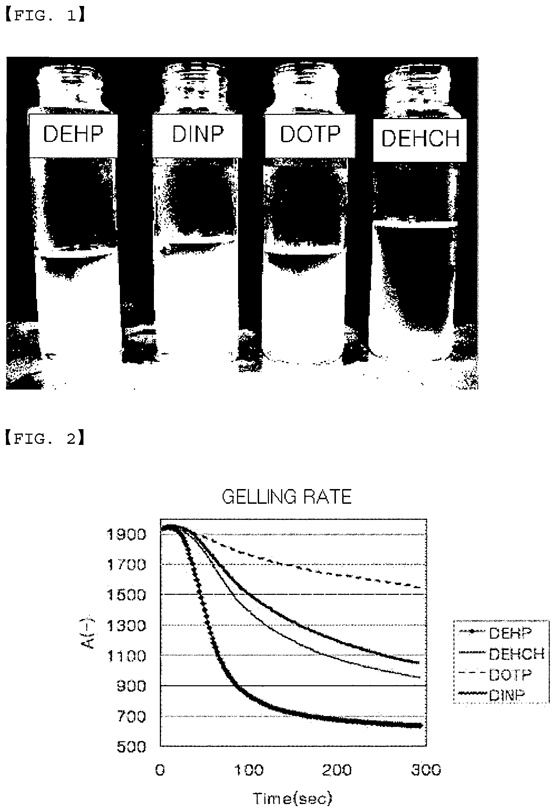

Low-temperature characteristics (-15°C) of the plasticizers used in the present invention were evaluated through the above Examples. As a result, as shown in FIG. 1, it was confirmed that low-temperature storage stability of the plasticizers was excellent in a sequence of diethylhexylcyclohexane, di-2-ethylhexyl phthalate, dioctyl terephthalate, and di-isononyl phthalate, and in the case of diethylhexylcyclohexane, since storage stability during winter in which there was a problem in the case of the existing phthalate based plasticizers and dioctyl terephthalate was significantly excellent, at the time of preparing the plastisol in winter, a decrease in a mixing time and an effect of decreasing the viscosity may be expected. In the case of diethylhexylcyclohexane, a phase change was not large at the low temperature, but the other plasticizers were partially congealed. In the present invention, diethylhexylcyclohexane was not congealed even at -15°C. Therefore, it may be confirmed that diethylhexylcyclohexane had an excellent low-temperature viscosity change property with the passage of time due to the excellent low-temperature characteristics as described above.

In the case of Example 11 in which diethylhexylcyclohexane was used alone and the viscosity depressant was not used, since the viscosity was not used, the initial viscosity was relatively high, the process viscosity, the room-temperature viscosity change with the passage of time, the low-temperature viscosity change with the time, and TVOC and HCHO values were excellent.

In addition, the results obtained by comparing gelling rates of the plasticizers used in the present invention were shown in FIG. 2, and the gelling rate was excellent in a sequence of di-2-ethylhexyl phthalate, diethylhexylcyclohexane, di-isononyl phthalate, and dioctyl terephthalate. The gelling rate of diethylhexylcyclohexane of the present invention was similar to that of di-2-ethylhexyl phthalate, which is a representative plasticizer, and significantly faster than those of di-isononyl phthalate and dioctyl terephthalate. Therefore, diethylhexylcyclohexane may be used in the existing manufacturing process of the wallpaper without particularly changing thermal conditions.

Hereinabove, although the present invention is described by specific matters, exemplary embodiments, and drawings, they are provided only for assisting in the entire understanding of the present invention. Therefore, the present invention is not limited to the exemplary embodiments. Various modifications and changes may be made by those skilled in the art to which the present invention pertains from this description.

## Claims

1. A vinyl chloride resin composition for the manufacturing of wallpapers, the composition comprising:
40 to 120 parts by weight of di(2-ethylhexyl)cyclohexane-1,4-dicarboxylate or a mixture of di(2-ethylhexyl)cyclohexane-1,4-dicarboxylate and dioctyl terephthalate in a weight ratio of 100:0 to 10:90 as a plasticizer;
0.5 to 7 parts by weight of a stabilizer;
0.5 to 5 parts by weight of a blowing agent;
30 to 150 parts by weight of a filler; and
1 to 20 parts by weight of titanium dioxide (TiO₂), based on 100 parts by weight of a vinyl chloride resin.

2. The composition of claim 1, wherein the stabilizer is at least one selected from a group consisting of Ca-Zn based compounds, K-Zn based compounds, Ba-Zn based compounds, organic tin based compounds, metallic soap based compounds, phenolic compounds, phosphoric acid ester based compounds, and phosphorous acid ester based compounds.

3. The composition of claim 1, wherein the blowing agent is at least one selected from a chemical blowing agent, a physical blowing agent, and a mixture thereof.

4. The composition of claim 1, wherein the filler is at least one selected from a group consisting of calcium carbonate, talc, kaolin, silica, alumina, magnesium hydroxide, and clay.

## Patentansprüche

1. Vinylchloridharzzusammensetzung für die Herstellung von Tapeten, die Zusammensetzung aufweisend:
40 bis 120 Gewichtsteile Di(2-Ethylhexyl)Cyclohexan-1,4-Dicarbonsäureesther oder eine Mischung aus Di(2-Ethylhexyl)Cyclohexan-1,4-Dicarbonsäureesther und Dioctyl-Terephthalat in einem Gewichtsverhältnis von 100:0 bis 10:90 als Weichmacher;
0,5 bis 7 Gewichtsteile eines Stabilisators;
0,5 bis 5 Gewichtsteile eines Treibmittels;
30 bis 150 Gewichtsteile eines Füllstoffs; und
1 bis 20 Gewichtsteile Titandioxid (TiO₂) basierend auf 100 Gewichtsteilen eines Vinylchloridharzes.

2. Zusammensetzung nach Anspruch 1, wobei der Stabilisator zumindest einer ausgewählt aus der Gruppe bestehend aus Ca-Zn-basierten Verbindungen, K-Zn-basierten Verbindungen, Ba-Zn-basierten Verbindungen, organischen Verbindungen auf Zinnbasis, Metallseife-basierten Verbindungen, Phenolverbindungen, Verbindungen auf Phosphorsäureester-Basis, und Verbindungen auf Phosphonsäureester-Basis.

3. Zusammensetzung nach Anspruch 1, wobei das Treibmittel zumindest eines ausgewählt aus einem chemischen Treibmittel, einem physikalischen Treibmittel, und einer Mischung dieser ist.

4. Zusammensetzung nach Anspruch 1, wobei der Füllstoff zumindest einer ausgewählt aus einer Gruppe bestehend aus Kalziumkarbonat, Talk, Kaolin, Siliziumoxid, Aluminiumoxid, Magnesiumhydroxid, und Kalk ist.

## Revendications

1. Composition de résine de chlorure de vinyle pour la fabrication de papiers peints, la composition comprenant :
40 à 120 parties en poids de di(2-éthylhexyl)cyclohexane-1,4-dicarboxylate ou un mélange de di(2-éthylhexyl)cyclohexane-1,4-dicarboxylate et de téréphtalate de dioctyle dans un rapport en poids de 100 : 0 à 10 : 90 comme plastifiant ;
0,5 à 7 parties en poids d'un stabilisant ;
0,5 à 5 parties en poids d'un agent gonflant ;
30 à 150 parties en poids d'une charge, et
1 à 20 parties en poids de dioxyde de titane (TiO₂), sur la base de 100 parties en poids d'une résine de chlorure de vinyle.

2. Composition selon la revendication 1, dans laquelle le stabilisant est au moins un élément sélectionné parmi un groupe consistant en des composés à base de Ca-Zn, des composés à base de K-Zn, des composés à base de Ba-Zn, des composés organo-stanniques, des composés à base de savon métallique, des composés phénoliques, des composés à base d'ester d'acide phosphorique, et des composés à base d'ester d'acide phosphoreux.

3. Composition selon la revendication 1, dans laquelle l'agent gonflant est au moins un élément sélectionné parmi un agent gonflant chimique, un agent gonflant physique, et un mélange de ceux-ci.

4. Composition selon la revendication 1, dans laquelle la charge est au moins un élément sélectionné parmi un groupe consistant en du carbonate de calcium, du talc, du kaolin, de la silice, de l'alumine, de l'hydroxyde de magnésium, et de l'argile.
